# EUROPEAN PATENT SPECIFICATION

(11) **EP 4 242 621 B1**
(45) Date of publication and mention of the grant of the patent: **15.01.2025**
(21) Application number: 20965093.6
(22) Date of filing: 10.12.2020
(51) Int. Cl.: G01M 11/02

(54) **WAVEFRONT MEASUREMENT DEVICE AND WAVEFRONT MEASUREMENT METHOD**
WELLENFRONTMESSVORRICHTUNG UND WELLENFRONTMESSVERFAHREN
DISPOSITIF DE MESURE DE FRONT D'ONDE ET PROCÉDÉ DE MESURE DE FRONT D'ONDE

(43) Date of publication of application: 13.09.2023
(73) Proprietor: MITSUBISHI ELECTRIC CORPORATION, Chiyoda-ku Tokyo 100-8310 (JP)
(72) Inventor: FUJIE, Akihiro, Tokyo 100-8310 (JP); MIWA, Yoshichika, Tokyo 100-8310 (JP); ENDO, Takao, Tokyo 100-8310 (JP); ANDO, Toshiyuki, Tokyo 100-8310 (JP)
(74) Representative: Pfenning, Meinig & Partner mbB
(86) International application number: PCT/JP2020/045966
(87) International publication number: WO 2022/123710

(56) References cited:
- JP-A- 2013 195 410
- JP-A- 2020 071 212
- US-A1- 2020 041 351
- BIRCH GABRIEL C. ET AL: "Hyperspectral Shack-Hartmann test", APPLIED OPTICS, vol. 49, no. 28, 1 October 2010 (2010-10-01), US, pages 5399, XP093103297, ISSN: 0003-6935, Retrieved from the Internet <URL:https://www.ncbi.nlm.nih.gov/pmc/articles/PMC3122479/pdf/nihms300586.pdf> DOI: 10.1364/AO.49.005399
- NOGUCHI MASANORI ET AL: "Active optics experiments. I. Shack-Hartmann wave-front analyzer to measure F/5 mirrors", JAPAN, NATIONAL ASTRONOMICAL OBSERVATORY, PUBLICATIONS (ISSN 0915-3640), VOL. 1, NO. 1, 1989, P. 49-55., 31 December 1989 (1989-12-31), XP093103603, Retrieved from the Internet <URL:http://dbc.nao.ac.jp/pub/vol1/049/PNAOJvol1p049.pdf> [retrieved on 20231120]

## Description

### [Technical Field]

The present disclosure relates to a wavefront measuring apparatus.

### [Background Technology]

The wavefront measuring apparatus measures an aberration of a light wavefront. An example of the wavefront measuring apparatus is a wavefront sensor of Shack-Hartmann method. The wavefront sensor of Shack-Hartmann method measures a wavefront shape of an optical system to be tested by splitting and condensing a light beam to be tested using a lens array and by measuring local wavefront tilts on the basis of relative deviations in the focusing positions of spot images. Therefore, the wavefront sensor of Shack-Hartmann method has an advantage over a phase-shift interferometer in that it is less sensitive to factors in the measurement environment, such as vibrations.

For example, the wavefront measuring apparatus described in Patent Document 1 is a measurement apparatus with a wavefront sensor of Shack-Hartmann method. In the wavefront measuring apparatus described in Patent Document 1, the beam transmitted through an optical system to be tested enters a wavefront sensor after the beam diameter is matched with the aperture width of a detector array, wherein a relay optical system is used to expand or reduce the beam diameter. Then, in the wavefront sensor, the light beam to be tested is split and individually condensed by a lenslet array, and a transmitted wavefront shape is calculated by a signal processing unit on the basis of the barycenter positions of condensing spot images captured on a detector array.

Birch, Gabriel C. et. al.: "Hyperspectral Shack-Hartmann test", Applied Optics, vol. 49, no. 28, 1 October 2010, p. 5399, describes a hyperspectral Shack-Hartmann test bed developed to characterize the performance of miniature optics across a wide spectral range. The test bed comprises a lenslet array and a relay lens.

Noguchi Masanori et. al.: "Active optics experiments. I. Shack-Hartmann wave-front analyser to measure F/5 mirrors", Japan National Astronomical Observatory Publications, vol. 1, no. 1, 31 December 1989, pp. 49-55, describes a Shack-Hartmann wave-front analyzer with an internal reference source and a cooled CCD camera constructed to measure the surface configuration of F/5 primary mirrors.

### [Prior Art References]

### [Patent Document]

[Patent Document 1] Japanese Unexamined Patent Application Publication No. 2015-55544 (Page 5, 0016 to 0018, FIG. 1)

### [Summary of the Invention]

### [Problem to be Solved by the Invention]

The wavefront measuring apparatus described in Patent Document 1 is configured so that a collimated light beam is split and individually condensed by a lens array to form an image plane of light beams on the detector array. A problem with this configuration is that it is difficult to downsize the apparatus because the total length of an optical system cannot be shortened due to the need to generate a parallel light flux of the size of the detector array.

The present invention is devised to solve the aforementioned problem and aims to shorten the total length of an optical system.

### [Means to Solve the Problem]

The wavefront measuring apparatus includes: a first lens array to split a radially propagating light beam after being emitted from an optical system to be tested and once forming an image, and then to condense each of the split light beams; a concave lens to further spread radially the plurality of split light beams from the first lens array; a detection unit disposed at a position where condensing spots of the plurality of split light beams radially propagating from the first lens array are formed; and a control unit to calculate, when the first lens array is at a position of conjugation with the optical system to be tested, a transmitted wavefront of the optical system to be tested from positions of the condensing spots.

### [Effect of the Invention]

The total length of an optical system can be shortened and the apparatus can be downsized.

### [Brief Descriptions of the Drawings]

FIG. 1 is a configuration diagram showing an example of wavefront measurement using a wavefront measuring apparatus 10 according to Embodiment 1.
FIG. 2 is an explanatory diagram showing a transmitted wavefront aberration according to Shack-Hartmann method.
FIG. 3 is a flow chart showing an example processing flow of the wavefront measuring apparatus 10.
FIG. 4 is a configuration diagram showing an example of wavefront measurement using the wavefront measuring apparatus 11 according to Modification 1 of Embodiment 1.
FIG. 5 is an explanatory diagram showing an example of a positional relationship between a lens 50 and an image element 51 according to Modification 1 of Embodiment 1.
FIG. 6 is another explanatory diagram showing the positional relationship between the lens 50 and the image element 51 according to Modification 1 of Embodiment 1.

### [Modes for Carrying out the Invention]

### Embodiment 1

Hereinafter, the wavefront measuring apparatus 10 according to Embodiment 1 will be described in detail with reference to the drawings. Embodiment 1 below shows a specific example, and all of the shapes, arrangements, and materials of the components shown therein are illustrative and not limiting. Also, the figures are all schematic and not to scale. In each figure, the same components are indicated with the same symbol.

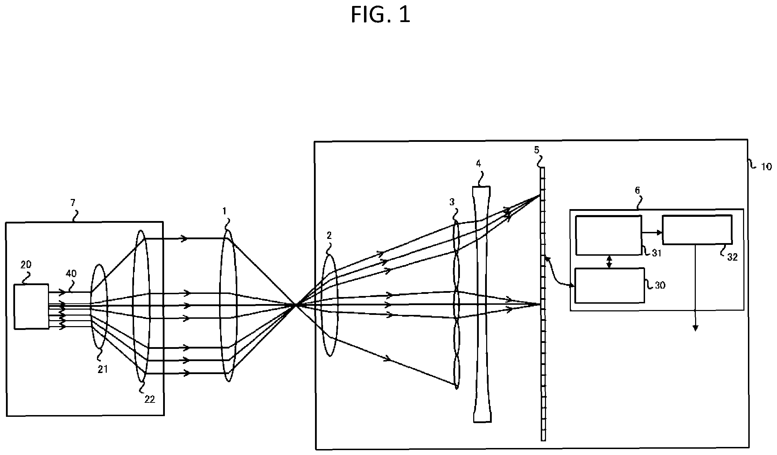

FIG. 1 is a configuration diagram showing an example of wavefront measurement using a wavefront measuring apparatus 10 according to Embodiment 1. A light beam 40 is emitted from a light source unit 7 to an optical system 1 to be tested, whose wavefront shape is to be measured, and the light beam to be tested, which is transmitted through the optical system 1 to be tested, is received by the wavefront measuring apparatus 10, resulting in measurement of the wavefront.

### < Configuration of wavefront measuring apparatus 10 >

The wavefront measuring apparatus 10 includes a lens array 3, a detection unit 5, and a processing unit 6. The wavefront measuring apparatus 10 may include a lens 2 and a lens 4.

### « Lens array 3 »

The lens array 3 is an array of a plurality of lenses arranged in parallel. The lenses of the lens array 3 each condense the entering light, so that a plurality of focus spots, for example, is generated.

### « Detection unit 5 »

The detection unit 5 detects light. The detection unit 5 is, for example, an imaging device. The detection unit 5 detects, for example, a projected image.

### « Processing unit 6 »

The processing unit 6 calculates a wavefront aberration on the basis of the information outputted from the detection unit 5. The processing unit 6 includes, for example, a processor and a memory. The processing unit 6 is, for example, a personal computer.

### « Lenses 2 and 4 »

The lenses 2 and 4 condense or disperse light. The lens 2 is, for example, a convex lens. The lens 4 is a concave lens.

< Other components >

### « Optical system 1 to be tested »

The optical system 1 to be tested is an optical system whose wavefront shape is to be measured. The optical system 1 to be tested includes, for example, a lens. The optical system 1 to be tested may be an optical system that includes a plurality of lenses, like a telescope. The optical system 1 to be tested may be an afocal system or an imaging optical system.

### « Light source unit 7 »

The light source unit 7 emits light to the optical system 1 to be tested. The light source unit 7 includes a light source 20 and a lens 21. The light source unit 7 may further include a lens 22 and any other lens. The light source 20 emits the light beam 40. The lenses 21 and 22 reshape the light beam 40 into a desired light beam. The light beam 40 emitted from the light source 20 is adjusted by the lenses 21 and 22 in accordance with the optical specifications of the incoming side of the optical system 1 to be tested. The light beam 40 transmitted through the lenses 21 and 22 may be collimated or condensing light.

### < Operation of wavefront measuring apparatus 10 >

The operation of the wavefront measuring apparatus 10 will be described next.

The light beam 40 emitted from the light source unit 7 enters the optical system 1 to be tested. In the optical system 1 to be tested as an imaging optical system, the light beam 40 transmitted through the optical system 1 to be tested is once imaged at the focal point and then enters the wavefront measuring apparatus 10.

After propagating through the focal point of the optical system 1 to be tested, the light beam 40 enters the wavefront measuring apparatus 10 and changes the beam divergence angle due to the lens 2. The pupil of the optical system 1 to be tested is transferred to the lens array 3 by the light beam 40 transmitted through the lens 2. In other words, the optical system 1 to be tested and the lens array 3 are in a conjugate relationship. The lens 2 has optical parameters necessary for the whole of the light beam 40 transmitted through the optical system 1 to be tested to enter the lens array 3. The lens 2 may have a convex surface on either or each of the incoming and outgoing sides of the light beam 40. The optical system 1 to be tested that is an afocal system does not require the lens 2. The light beam 40 transmitted through the lens 2 propagates to the lens array 3 at a divergence angle with respect to the optical axis.

The lens array 3 splits the light beam 40 propagating from the lens 2 into N condensing beams that produce an image plane on the detection unit 5. N is a natural number of two or larger. N is the number of lenses that constitute the lens array 3. The split light beams 40 transmitted through the lens array 3 propagate to the lens 4 at divergent angles with respect to the optical axis depending on the entering angles and positions at the lens array 3.

Each of the plurality of light beams 40 propagating from the lens array 3 bends in a more divergent direction with respect to the optical axis of the center light beam 40 depending on the entering angle and position at the lens 4, to further propagate to the detection unit 5. The lens 4 has optical parameters to match the beam width to enter the detection unit 5 with the aperture width of the detection unit 5. The lens 4 may be replaced by a set of refracting lenses capable of bending the beams in the more divergent directions with respect to the optical axis. Without the lens 4, the condensing spots of the plurality of light beams 40 radially spreading from the lens array 3 are formed on the detection unit 5.

The detection unit 5 captures the spot images of the condensing light beams propagating from the lens array 3 or the lens 4. On the detection unit 5, the spot images are formed in the number corresponding to the number of segments in the lens array 3. The transmitted wavefront aberration for the optical system 1 to be tested can be calculated from the deviations in the barycenter positions of the spot images.

The processing unit 6 includes a control circuit 30, a signal processing unit 31, and an operation unit 32. The control circuit 30 generates a control signal corresponding to the imaging conditions such as an exposure time and transmits the control signal to the detection unit 5. The control circuit 30 controls a readout signal from the detection unit 5 and transmits the readout signal to the signal processing unit 31. The signal processing unit 31 inputs the imaging conditions such as the exposure time to the control circuit 30. The signal processing unit 31 outputs a measured value according to the readout signal from the detection unit 5 and the control circuit 30 to the operation unit 32. The operation unit 32 calculates the wavefront to be calculated on the basis of the measured value from the signal processing unit 31. The operation unit 32 calculates the transmitted wavefront aberration of the optical system 1 to be tested from the results of barycenter calculation for the condensing spot images. The measured value gives information about the image of a condensing spot.

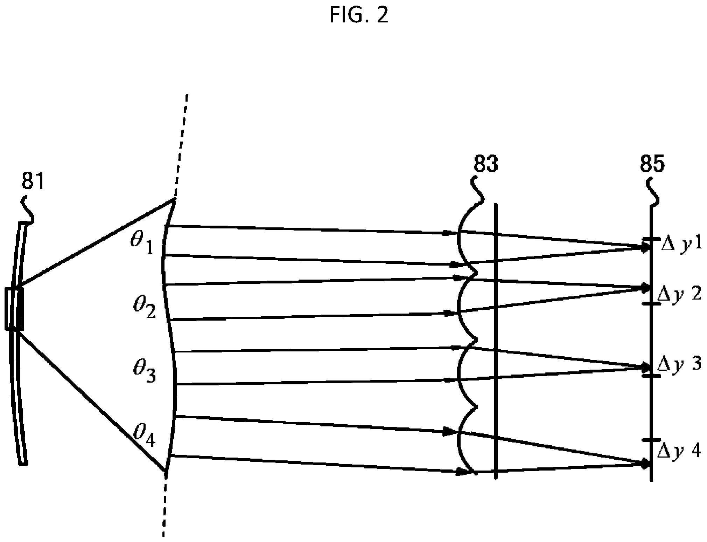

FIG. 2 is an explanatory diagram showing the transmitted wavefront aberration according to Shack-Hartmann method. In this figure, an optical system 81 to be tested, a lenslet array 83, and a detector array 85 in a wavefront measuring apparatus described in Patent Document 1 are shown. Here, the deviations of the barycenter positions of the spot images at the detector array 85 are defined as Δyi, the distance of the focal point of the lenslet array 83 is defined as f, and the slopes of the local wavefronts corresponding to the entrance pupils of the lenslet array 83 are defined as θi. From the equation Δyi = 2fθl, the transmitted wavefront aberration of the optical system 81 to be tested can be calculated. In the wavefront measuring apparatus 10, a divergent light beam but not a parallel light beam enters the lens array 3, so that the focus spots are deviated in such a way that they diverge outward from the center point of detection unit. It is necessary to take the deviations into account in advance to calculate the transmitted wavefront aberration.

### < Processing flow chart >

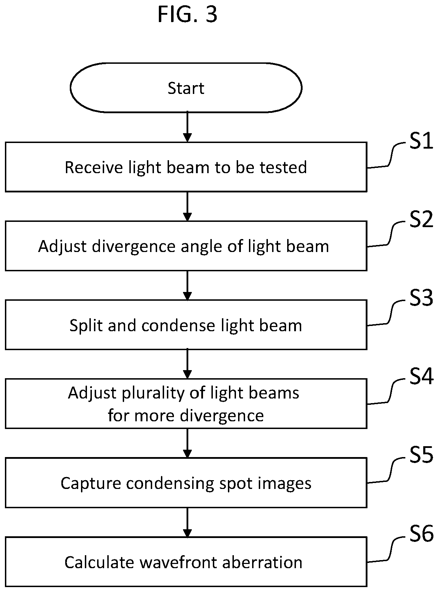

FIG. 3 is a flow chart showing an example processing flow of the wavefront measuring apparatus 10. The operation of the wavefront measuring apparatus 10 will be described with reference to FIG. 3.

In Step S1, the light beam to be tested is transmitted through the optical system 1 to be tested and once forms an image at the focal point then to enter the wavefront measuring apparatus 10. Then, the process proceeds to Step S2.

In Step S2, the lens 2 adjusts the divergence angle of the light beam 40. The light beam 40 transmitted through the lens 2 propagates to the lens array 3 with a divergence angle with respect to the optical axis. Then, the process proceeds to Step S3.

In Step S3, the lens array 3, which is in a conjugate relationship with the optical system 1 to be tested, splits the light beam 40 into N condensing beams that produce an image plane on the detection unit 5. N is a natural number of two or larger. The light beams 40 transmitted through the lens array 3 propagate to the lens 4 at divergent angles with respect to the optical axis depending on the entering angles and positions at the lens array 3. Then, the process proceeds to Step S4.

In Step S4, the plurality of light beams 40 bend in more divergent directions with respect to the optical axis of the center light beam 40 depending on the entering angles and positions at the lens 4, to further propagate to the detection unit 5. Then, the process proceeds to Step S5.

In Step S5, the detection unit 5 captures the spot images of the condensing light beams. Then, the process proceeds to Step S6.

In Step S6, the processing unit 6 calculates the transmitted wavefront aberration of the optical system 1 to be tested from the results of barycenter calculation for the condensing spot images.

In the wavefront measuring apparatus described in Patent Document 1, it is difficult to shorten the distance from the optical system to be tested to the lens array because the parallel light of the same size as the lens array must be generated. In addition, the distance between the lens array and the detector array is determined by the focal length of the lens array and thus cannot be shortened. In the configuration shown in Embodiment 1, the distance from the optical system 1 to be tested to the lens array 3 can be shortened because the diffusion light is allowed to enter the lens array 3. Since the light beams 40 transmitted through the lens array 3 also keep its spread, the detection unit 5 can have a larger area. This can improve the accuracy of the wavefront measurement. Alternatively, when the size of the detection unit 5 is made the same as that of a conventional apparatus, the distance from the optical system 1 to be tested to the detection unit 5 can be shortened.

### "Diffusion light" means a light beam that propagates while spreading.

By further adding the lens 4, the light beams 40 transmitted through the lens array 3 further spread, so that the accuracy of the wavefront measurement can be improved. Alternatively, when the size of the detection unit 5 is made the same as that of a conventional apparatus, the distance from the optical system 1 to be tested to the detection unit 5 can be further shortened.

By adjusting the bending of the lens 4, the curvature of field produced in the lens array 3 can be corrected and the aberration produced inside the wavefront measuring apparatus 10 can be reduced, which contributes to improving the measurement accuracy of the wavefront measuring apparatus 10.

In the wavefront measuring apparatus described in Patent Document 1, the entering beam width is matched with the aperture width of the imaging device. Therefore, there has been a problem that the total length of the optical system in the wavefront measuring apparatus inevitably becomes long, especially in a case of an optical system with a large F value. In the configuration of the wavefront measuring apparatus 10 shown in Embodiment 1, both ensuring the measurement performance of the wavefront measuring apparatus 10 and reducing the total length of the optical system can be achieved by adding the lens 4 to spread the light beams.

As described above, by allowing the diffusion light to enter the lens array 3, the total length of the optical system can be shortened and thus the apparatus can be downsized. By further adding the lens 4, further downsizing of the apparatus or improvement of the detection accuracy can be achieved.

### « Modification 1 »

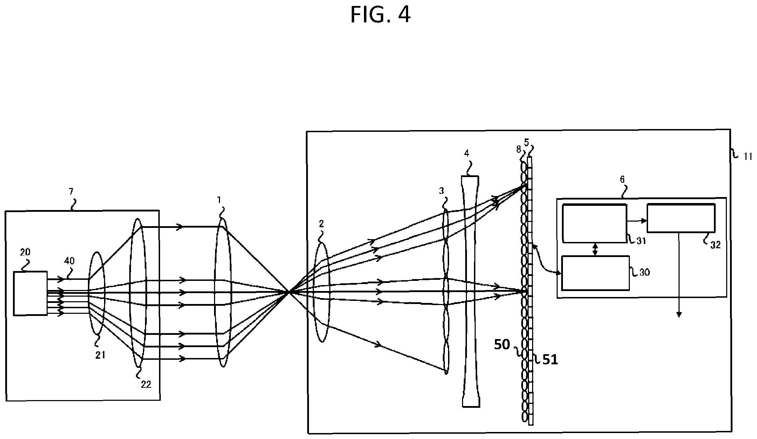

An example will be shown in which a detection unit with a lens array is used. FIG. 4 is a configuration diagram showing an example of wavefront measurement using a wavefront measuring apparatus 11 according to Modification 1 of Embodiment 1.

The wavefront measuring apparatus 11 is obtained by adding a lens array 8 to the wavefront measuring apparatus 10. Since the other components are the same as those shown in FIG. 1, their description will be omitted.

### < Configuration of wavefront measuring apparatus 11 >

The wavefront measuring apparatus 11 includes the lens arrays 3, a lens array 8, the detection unit 5, and the processing unit 6. The wavefront measuring apparatus 11 may include the lens 2 and includes the lens 4.

### « Lens array 8 »

The lens array 8 is configured with a plurality of lenses 50 arranged in parallel. The lens array 8 forms a plurality of focus spots because each of the lenses 50, for example, condenses the entering light. The lens array 8 is provided at a stage before the light beams 40 enter the detection unit 5. The lens array 8 is attached to the detection unit 5. In Modification 1, the lens array 3 is referred to as a first lens array and the lens array 8 is referred to as a second lens array.

The lenses 50 in the lens array 8 each correspond to one of the image elements 51 in the detection unit 5 on a one-to-one basis. The spacing between the lenses 50 is smaller than the spacing between the image elements 51.

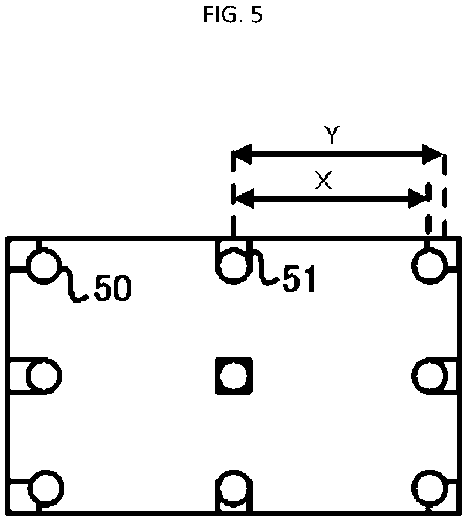

FIG. 5 is an explanatory diagram showing an example of a positional relationship between a lens 50 and an image element 51 according to Modification 1 of Embodiment 1. FIG. 5 is a diagram showing the detection unit 5 viewed from the side of the lens array 3. For simplicity, only some of the lenses 50 and the image elements 51 are shown. The lenses 50 are arrayed side by side with the neighboring lenses 50. The image elements 51 are arrayed side by side with the neighboring image elements 51. A value X, which is M times (M is a natural number) the lens pitch of the lenses 50 in the lens array 8, is smaller than a value Y, which is M times the pitch of the image elements 51 in the detection unit 5.

In FIG. 5, at the center of the aperture, the center position of the lens 50 in the lens array 8 and the center position of the image element 51 in the detection unit 5 coincide with each other. In the periphery of the aperture, the center positions of the lenses 50 in the lens array 8 and the center positions of the image elements 51 in the detection unit 5 are shifted from each other.

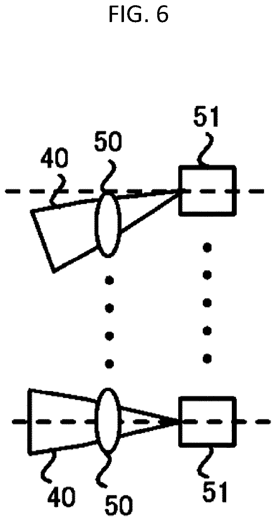

FIG. 6 is another explanatory diagram showing the positional relationship between the lens 50 and the image element 51 according to Modification 1 of Embodiment 1. FIG. 6 is an enlarged view of part of the lens array 8 and the detection unit 5 shown in FIG. 4. For simplicity, only two pairs of the lens 50 and the image element 51, one disposed in the upper portion and the other disposed in the center portion, are illustrated. The plurality of lenses 50 are vertically arranged. The plurality of image elements 51 are vertically arranged. As for the lens 50 and the image element 51 disposed in the center portion, the optical axis of the light beam 40 passes through the centers of the lens and the image element. In this case, the optical axis is horizontal. As for the lens 50 and the image element 51 disposed in the upper portion, the center of the lens 50 is disposed at a lower position than the center of the image element 51. In this case, the optical axis goes up to the right.

For the detection unit 5 equipped with the lens array 8, a commercially available imaging device with micro lenses, which is mass-produced for cameras, may be used, for example.

### < Operation of wavefront measuring apparatus 11 >

The wavefront measuring apparatus 11 basically operates in the same manner as the wavefront measuring apparatus 10. The detection unit 5 captures the spot images of the condensing light beams propagating from the lens array 8. On the detection unit 5, the spot images are formed in the number corresponding to the number of lens segments in the lens array 3. The transmitted wavefront aberration for the optical system 1 to be tested can be calculated from the deviations in the barycenter positions of the spot images.

By adding the lens array 8 at a stage before the detection unit 5, the light beams propagating from the lens 4 can enter the image elements 51 over a wide field of view, and thus the aperture ratio of the condensing spot images is improved. As a result, the resolution limit of the condensing spot images is improved, and thus the measurement accuracy of the wavefront sensor for calculating the wavefront aberration by means of the barycenter calculation is improved.

The light beams 40, each having a certain angle, enter the lenses 50 and the image elements 51. As a result, a commercially available imaging device with micro lenses, the device being mass-produced for cameras, can be used as the detection unit 5 equipped with the lens array 8, so that the cost of the apparatus can be reduced. In many cases, in the production of commercially available imaging devices provided with micro lenses, in the periphery of the aperture, the centers of the micro lenses are shifted from the centers of imaging elements in order for the beams, each with an angle, to enter their respective light receiving portions. Therefore, in the wavefront measuring apparatus described in Patent Document 1, it is necessary to match the centers of the micro lenses with the centers of the imaging elements, so that it has been difficult to use a commercially available imaging device with micro lenses. In contrast, the configuration of Modification 1 according to Embodiment 1 makes it possible to use a commercially available imaging device with micro lenses.

Note that, each configuration shown in the above-described embodiment includes ranges to be considered for tolerances in manufacturing and variations in assembling. Therefore, the positional relationships between the components and the shapes of the components, if any, described in claims include ranges to be considered for tolerances in manufacturing and variations in assembling.

Note that, notwithstanding the embodiment described above, the present invention should not be limited thereto. The matter for which protection is sought is defined by the appended claims.

### [Description of Symbols]

1...... optical system to be tested,
2 ...... lens,
3 ...... lens array,
4 ...... lens,
5 ...... detection unit
6 ...... processing unit,
7 ...... light source unit,
8 ...... lens array,
10, 11 wavefront measuring apparatus,
20 .... light source,
21, 22 lens,
30 .... control circuit,
31 .... signal processing unit,
32 .... operation unit,
40 .... light beam,
50 .... lens,
51 .... image element,
81 .... optical system to be tested,
83 .... lenslet array,
85 .... detector array

## Claims

1. A wavefront measuring apparatus (10, 11) comprising:
a first lens array (3) to split a radially propagating light beam (40) after being emitted from an optical system (1) to be tested and once forming an image, and then to condense each of the split light beams;
a concave lens (4) to further spread radially the plurality of split light beams from the first lens array;
a detection unit (5) disposed at a position where condensing spots of the plurality of split light beams radially propagating from the first lens array are formed; and
a control unit (6) to calculate, when the first lens array is at a position of conjugation with the optical system to be tested, a transmitted wavefront of the optical system to be tested from positions of the condensing spots.

2. The wavefront measuring apparatus (10, 11) according to claim 1, further comprising:
a second lens array (8) at a stage before the light beams (40) enter the detection unit (5).

3. The wavefront measuring apparatus (10, 11) according to claim 2, wherein a surface area of the second lens array (8) is smaller than that of the detection unit (5).

4. A wavefront measuring method using a wavefront measuring apparatus according to any of claims 1-3 comprising:
a splitting and condensing step (S3) of splitting a light beam (40) from an optical system (1) to be tested and condensing each of the split light beams at a position of conjugation with the optical system to be tested;
a step (S4) of further spreading radially the plurality ofsplit and condensed light beams spreading radially;
a detecting step (S5) of detecting the split and condensed light beams spreading radially; and
a processing step (S6) of calculating a transmitted wavefront of the optical system to be tested from positions of the light beams detected in the detecting step.

5. The wavefront measuring method of claim 4, further comprising:
a step of causing each of the plurality of split and condensed light beams (40) spreading radially to enter an image element (51).

## Patentansprüche

1. Wellenfrontmessvorrichtung (10, 11), umfassend:
eine erste Linsenanordnung (3), um einen sich radial ausbreitenden Lichtstrahl (40) aufzuteilen, nachdem er von einem zu testenden optischen System (1) emittiert wurde und einmal ein Bild gebildet hat, und um dann jeden der aufgeteilten Lichtstrahlen zu kondensieren;
eine konkave Linse (4) zur weiteren radialen Streuung der Vielzahl von geteilten Lichtstrahlen aus der ersten Linsenanordnung;
eine Erfassungseinheit (5), die an einer Position angeordnet ist, an der Kondensationspunkte der Vielzahl von geteilten Lichtstrahlen, die sich radial von der ersten Linsenanordnung ausbreiten, gebildet werden; und
eine Steuereinheit (6), um, wenn sich die erste Linsenanordnung in einer Position der Konjugation mit dem zu testenden optischen System befindet, eine übertragene Wellenfront des zu testenden optischen Systems aus den Positionen der Kondensationspunkte zu berechnen.

2. Wellenfrontmessvorrichtung (10, 11) nach Anspruch 1, ferner umfassend:
eine zweite Linsenanordnung (8) in einem Stadium, bevor die Lichtstrahlen (40) in die Erfassungseinheit (5) eintreten.

3. Wellenfrontmessvorrichtung (10, 11) nach Anspruch 2, wobei ein Flächenbereich der zweiten Linsenanordnung (8) kleiner ist als der der Erfassungseinheit (5).

4. Wellenfrontmessverfahren unter Verwendung einer Wellenfrontmessvorrichtung nach einem der Ansprüche 1 bis 3, umfassend:
einen Teilungs- und Kondensationsschritt (S3) des Aufteilens eines Lichtstrahls (40) von einem zu testenden optischen System (1) und des Kondensierens jedes der geteilten Lichtstrahlen an einer Position der Konjugation mit dem zu testenden optischen System;
einen Schritt (S4) der weiteren radialen Ausbreitung der Vielzahl von geteilten und kondensierten Lichtstrahlen, die sich radial ausbreiten;
einen Erfassungsschritt (S5) des Erfassens der sich radial ausbreitenden geteilten und kondensierten Lichtstrahlen; und
einen Verarbeitungsschritt (S6) des Berechnens einer übertragenen Wellenfront des zu testenden optischen Systems aus Positionen der im Erfassungsschritt erfassten Lichtstrahlen.

5. Wellenfrontmessverfahren nach Anspruch 4, ferner umfassend:
einen Schritt des Veranlassens, dass jeder der Vielzahl von geteilten und kondensierten Lichtstrahlen (40), die sich radial ausbreiten, in ein Bildelement (51) eintritt.

## Revendications

1. Appareil de mesure de front d'onde (10, 11) comprenant :
un premier réseau de lentilles (3) pour diviser un faisceau lumineux se propageant radialement (40) après avoir été émis à partir d'un système optique (1) à tester et une fois qu'une image a été formée, puis pour condenser chacun des faisceaux lumineux divisés ;
une lentille concave (4) pour étaler davantage radialement la pluralité de faisceaux lumineux divisés à partir du premier réseau de lentilles ;
une unité de détection (5) disposée dans une position où des points de condensation de la pluralité de faisceaux lumineux divisés se propageant radialement à partir du premier réseau de lentilles sont formés ; et
une unité de contrôle (6) pour calculer, lorsque le premier réseau de lentilles est dans une position de conjugaison avec le système optique à tester, un front d'onde transmis du système optique à tester à partir de positions des points de condensation.

2. Appareil de mesure de front d'onde (10, 11) selon la revendication 1, comprenant en outre :
un second réseau de lentilles (8) à un stade avant que les faisceaux lumineux (40) n'entrent dans l'unité de détection (5).

3. Appareil de mesure de front d'onde (10, 11) selon la revendication 2, dans lequel une surface du second réseau de lentilles (8) est plus petite que celle de l'unité de détection (5).

4. Procédé de mesure de front d'onde utilisant un appareil de mesure de front d'onde selon l'une quelconque des revendications 1 à 3, comprenant :
une étape de division et de condensation (S3) consistant à diviser un faisceau lumineux (40) provenant d'un système optique (1) à tester et à condenser chacun des faisceaux lumineux divisés dans une position de conjugaison avec le système optique à tester ;
une étape (S4) d'étalement radial supplémentaire de la pluralité de faisceaux lumineux divisés et condensés s'étalant radialement ;
une étape de détection (S5) consistant à détecter les faisceaux lumineux divisés et condensés s'étendant radialement ; et
une étape de traitement (S6) consistant à calculer un front d'onde transmis du système optique à tester à partir de positions des faisceaux lumineux détectés dans l'étape de détection.

5. Procédé de mesure de front d'onde selon la revendication 4, comprenant en outre :
une étape consistant à amener chacun de la pluralité de faisceaux lumineux divisés et condensés (40) s'étendant radialement à entrer dans un élément d'image (51).
